# EUROPÄISCHE PATENTSCHRIFT

(11) **EP 3 110 567 B1**
(45) Veröffentlichungstag und Bekanntmachung des Hinweises auf die Patenterteilung: **01.04.2020**
(21) Anmeldenummer: 15707128.3
(22) Anmeldetag: 27.02.2015
(51) Int. Cl.: B05D 7/14, B05D 3/02, B05D 7/00, B05D 1/08, B05D 1/14, B05D 1/00, F16L 58/10, F16L 58/18, F16L 13/02

(54) **GROSSROHRANORDNUNG UND VERFAHREN ZUR HERSTELLUNG EINER SOLCHEN**
LARGE-DIAMETER PIPE ARRANGEMENT AND METHOD FOR PRODUCING THE SAME
ENSEMBLE DE GROS TUYAUX ET PROCÉDÉ DE PRODUCTION D'UN ENSEMBLE DE GROS TUYAUX DE CE TYPE

(30) Priorität: 27.02.2014 DE 102014102621
(43) Veröffentlichungstag der Anmeldung: 04.01.2017
(73) Patentinhaber: InProCoat Holding GmbH, 57223 Kreuztal (DE)
(72) Erfinder: BECKER, Otmar, 57482 Wenden (DE); DOEGE, Jörg, 57072 Siegen (DE); MOELLER, Lars, 57562 Herdorf (DE)
(74) Vertreter: MFG Patentanwälte Meyer-Wildhagen Meggle-Freund Gerhard PartG mbB
(86) Internationale Anmeldenummer: PCT/EP2015/054141
(87) Internationale Veröffentlichungsnummer: WO 2015/128465

(56) Entgegenhaltungen:
- EP-A1- 1 879 703
- EP-A1- 1 899 638
- EP-A1- 2 298 455

## Beschreibung

### GEBIET DER ERFINDUNG

Die vorliegende Erfindung betrifft eine Großrohranordnung für eine Pipeline sowie ein Verfahren zur Herstellung einer solchen Großrohranordnung.

### HINTERGRUND DER ERFINDUNG

Großrohre dienen allgemein als Tragwerkelemente (Masten für Windkraftanlagen) oder als medienführende Komponenten im Leitungsrohrbereich. Sie dienen dann beispielsweise als Wasser-, Gas- oder Ölpipelinerohre.

Zum Bau einer Pipeline werden in der Regel einheitliche Rohrstücke (Länge ca. 6 - 12 m, Durchmesser ca. 300 - 2200 mm, Wandstärken ca. 8 - 40 mm) verwendet. In der Regel werden dazu organisch beschichtete Stahlrohrstücke verwendet, die mit einer Außen- und gegebenenfalls auch mit einer Innenbeschichtung versehen sind. Die Rohrenden liegen in der Regel frei und werden vor Ort miteinander verschweißt und anschließend nachbeschichtet.

Bei seeverlegten Gaspipelines sind Großrohre mit unterschiedlichen Außendurchmessern/Wandstärken erforderlich, um die Pipeline bei der Verlegung (und gegebenenfalls auch im Betrieb) in regelmäßigen Abständen gegen den äußeren Überdruck, der durch das umgebende Wasser auf die Pipeline ausgeübt wird, abzustützen.

Als Stütze dienen sogenannte Buckle-Arrestor-Rohre, die aus mehreren Rohrstücken mit unterschiedlichen Außendurchmessern, bei gleichem Innendurchmesser gebildet werden. Solche Buckle-Arrestor-Rohre haben üblicherweise eine Länge von etwa 12 m und bestehen bspw. jeweils aus drei ca. 4 m langen Segmenten. Dabei weist das mittlere Segment den vergrößerten Außendurchmesser auf, der aus der erhöhten, stabilisierenden Wanddicke herrührt. Dieser Bereich mit erhöhter Wanddicke hat einen wesentlich höheren Widerstand gegen eine Außendruckbelastung (äußerer Überdruck) gegenüber den übrigen Bereichen des Rohrstücks bzw. der Pipeline. Er wirkt als Stützelement für eine bestimmte Pipelinelänge, die aus mehreren Rohrabschnitten mit der normalen (geringeren) Wandstärke ausgeführt sind. Je nach Wassertiefe und dem dort herrschenden Druck sind solche Buckle-Arrestor-Rohre in einem Abstand von 500 m - 1500 m erforderlich.

Die Leitungsrohrabschnitte für Pipelines sind vorgefertigt und - abgesehen von den Enden - werksseitig vollständig beschichtet. Als Beschichtung ist eine 3-Lagen-Polyolefin (Polyethylen- bzw. Polypropylen) Beschichtung (vgl. ISO 21809-1) üblich.

Zur Vorbereitung der Beschichtung werden die Rohre zunächst gereinigt, strahlentrostet und entstaubt. Im Anschluss daran wird die Rohroberfläche mit einer Fusion-Bonded-Epoxy-(FBE)-Grundierung versehen. Dazu wird eine aus mehreren Komponenten bestehende Epoxy-Harzmischung in Pulverform auf das erwärmte Rohr (150°C - 250°C) aufgetragen. Die Epoxy-Bestandteile gehen dabei in eine Schmelze über, in der sie sich vermischen, miteinander in gewünschter Weise reagieren, sich nach einer sogenannten Gel-Zeit (ca. 5-40 s) verfestigen und schließlich aushärten.

Übliche Schichtdicken der FBE-Grundierung betragen ca. 80 µm - 250 µm und bis zu 450 µm. Anschließend wird ein Kleber auf die FBE-Lage aufgetragen, der als Haftvermittler zu einer abschließend aufgetragenen Polyolefin-Lage dient. Während die FBE-Innenlage vornehmlich als dichter Korrosionsschutz für die Rohraußenfläche dient, erfüllt die Kleberzwischenlage eine haftvermittelnde Aufgabe zur Polyolefin-Außenlage, die bei entsprechender Schichtdicke als Barriere gegen Umwelteinflüsse und als mechanischer Schutz der Pipeline dient. Die Gesamtschichtdicke beträgt für seeverlegte Pipelines mit felsigem oder steinigem Untergrund je nach Polyolefin-Qualität zwischen etwa 3,5 mm und 4,7 mm.

Solche mit einer Polyolefin-Deckschicht versehenen Stahlrohre weisen eine hohe dynamische Bruchzähigkeit der Beschichtung auf, sodass sie sowohl im Betrieb (also im verlegten Zustand) als auch während des Verlegens gegen äußere mechanische Beschädigungen geschützt sind (siehe z.B. EP 1 401 936 B1). Andere Beschichtungssysteme sind auch aus der EP 2 399 058 bekannt, bei der die Rohre mit einer Polyamid-Schicht versehen werden, die beispielsweise als Außenlage auf einer Keramiklage bzw. auf einer Polyolefin-Lage mit einem dazwischen angeordneten Haftvermittler ausgeführt sind. Die EP 1 879 703 A1 beschreibt ein Verfahren zur Beschichtung von äußeren Oberflächen von Rohrleitungen, bei dem mittels einer Pulversprühanlage eine Grundierungsschicht aus Epoxidharz auf eine Rohrleitung und anschließend mittels mehreren (Wickel-)Extrudern Polyethylen aufgetragen werden. Die EP 2 298 455 A1 offenbart ein Verfahren zum Beschichten von Rohren, insbesondere von einer Montageverbindung (field joint) zwischen zwei Rohreinheiten. Die EP 1 899 638 A1 beschreibt ein Verfahren zum Beschichten von Innenflächen von Verbindungsstücken mittels einer Innenauskleidung.

Mit ausschlaggebend für die Qualität der Beschichtung ist die Qualität der Innenlage, nämlich der FBE-Grundierung, die direkt auf die erwärmte Rohraußenfläche aufgetragen werden muss. Bei den bekannten Beschichtungsverfahren wird dazu der zu beschichtende Bereich (ein Rohrabschnitt) mittels einer relativ eng um das Rohr herumverlaufenden Induktionsspule erwärmt. Dabei wird das Rohr bzw. der Rohrabschnitt linear entlang seiner Achse durch die Induktionsspule geführt, welche lokal Wirbelströme im Stahlwerkstoff erzeugt, die das Rohr bedingt durch den elektrischen Widerstand lokal im Bereich der Spule erwärmen. Der erwärmte Rohrabschnitt tritt aus der Spule aus, wo dann mittels einer Spritzdüse das Epoxy-Material auf die erwärmte Rohroberfläche aufgetragen wird, wo dann wärmebedingt der Schmelz- und Mischvorgang stattfindet. Für eine einwandfreie Beschichtung ist eine sehr genaue und gleichmäßige Wärmeführung im Rohr bzw. im zu beschichtenden Rohrabschnitt erforderlich.

Bei den sogenannten Buckle-Arrestor-Rohren, die aus unterschiedlich dicken Rohrabschnitten bestehen, werden jeweils die einzelnen Rohrabschnitte unterschiedlicher Dicke getrennt beschichtet, anschließend miteinander verschweißt und dann nach dem Zusammenfügen in den Übergangsbereichen (auch Schweißnahtbereichen) nachbeschichtet. Dieses Verfahren ist relativ aufwändig und teuer und die Qualität der Nachbeschichtung, die keinen vollkommen homogenen Anschluss an die bereits vorhandenen Rohrbeschichtungen bilden kann, kann hinsichtlich ihrer Qualität problematisch sein.

Eine durchgehende homogene Beschichtung der Buckle-Arrestor-Rohre ist jedoch mit den bekannten Durchlaufverfahren und -einrichtungen (Induktionsspulen, Ringbrenner) nicht möglich Bei lokaler Erwärmung, insbesondere im Übergangsbereich zwischen den Abschnitten mit kleinerem und größerem Außendurchmesser (bzw. niedriger oder hoher Wanddicke) ist keine homogene Wärmeführung möglich. Bei der induktiven Erwärmung schwankt durch die unterschiedlichen Spaltgrößen zwischen Werkstück und Induktionsspule in diesem Bereich die in das Rohr eingebrachte Energie erheblich. Damit ist keine konsistente FBE-Beschichtung in diesem Bereich möglich.

Die Herstellung der Buckle-Arrestor-Rohre, die für die Seeverlegung von Pipelines erforderlich sind, ist daher, insbesondere auch hinsichtlich der Beschichtung, aufwändig und teuer. Zudem ist durch die erforderliche Nachbeschichtung der Übergangsbereiche dort die Beschichtungsqualität unter Umständen eingeschränkt, selbst wenn die Buckle-Arrestor-Rohre komplett aus drei Abschnitten vorgefertigt und unter Werkstattbedingungen komplett vorbeschichtet an der Verlegestelle bereitgestellt werden können. Herkömmlich hergestellte Buckle-Arrestor-Rohre können in den Ubergangsbereichen korrosionsanfälliger sein, da hier unterschiedliche Beschichtungssysteme angewendet werden müssen und daher eine optimale Haftung der Beschichtungssysteme mit dem Rohr selbst und untereinander nur eingeschränkt realisierbar ist.

Es besteht also die Aufgabe, eine insbesondere hinsichtlich der Beschichtung verbesserte Großrohranordnung für Pipelines zur Verfügung zu stellen, insbesondere solche Rohranordnungen, bei denen Rohrabschnitte mit unterschiedlichen Durchmessern bzw. Wandstärken zusammen verarbeitet und in optimierter Qualität beschichtet werden können.

Diese Aufgabe löst die Großrohranordnung gemäß Anspruch 1 sowie das Verfahren zu deren Herstellung gemäß Anspruch 8.

### ZUSAMMENFASSUNG DER ERFINDUNG

Die erfindungsgemäße Großrohranordnung weist einen ersten Rohrabschnitt mit einem ersten Außendurchmesser und einer ersten Wanddicke und einen zweiten Rohrabschnitt mit einem zweiten Außendurchmesser und einer zweiten Wanddicke auf. Dabei sind der erste Außendurchmesser und die erste Wanddicke größer als der zweite Außendurchmesser und die zweite Wanddicke. Beide Rohrabschnitte (der erste und der zweite Rohrabschnitt) sind in einem Übergangsbereich miteinander verbunden, insbesondere verschweißt, und mit einer Beschichtung versehen, die sich dadurch auszeichnet, dass der erste und zweite Rohrabschnitt sowie der Übergangsbereich mit einer durchgehenden, homogenen mehrlagigen Außenbeschichtung versehen sind, die eine durchgehende, homogene Fusion-Bonded-Epoxy-(FBE)-Innenlage und eine durchgehende, homogene Polyolefin-Außenlage umfasst. Auf diese Weise ist sichergestellt, dass alle Rohrabschnitte und Übergangsbereiche durchgängig eine Beschichtung mit konsistenten Eigenschaften aufweisen.

Durchgehend bzw. durchgängig heißt in diesem Zusammenhang, dass die Beschichtungslage in einem kontinuierlichen Prozess auf den ersten und zweiten Rohrabschnitt sowie den Ubergangsbereich aufgebracht wird. Homogen bedeutet hier, dass jede der Lagen sowohl in Längsrichtung (axial) als auch in Umfangsrichtung eine homogene Werkstoffstruktur ohne wesentliche Unterschiede hinsichtlich der Zusammensetzung, der Eigenschaften und der Qualität aufweist.

Eine solche Großrohranordnung ist hinsichtlich seiner Gestehungskosten und seiner Beschichtungsqualität den bekannten Großrohranordnungen überlegen.

Es gibt Ausführungen bei denen ein erster Rohrabschnitt (mit größerem Außendurchmesser und größerer Wanddicke) zwischen zwei (zweiten) Rohrabschnitten mit kleinerem Außendurchmesser und kleinerer Wanddicke angeordnet ist und mit diesen verbunden ist. So eine Anordnung wird auch als Buckle-Arrestor-Rohr bezeichnet und ist jeweils besonders geeignet mit den seinen Endabschnitten, die Standardabmessungen aufweisen, in eine Pipeline, die aus den Rohren mit geringerem Durchmesser und geringerer Wandstärke besteht, integriert zu werden.

Bei einer Ausführung wird die FBE-Innenlage dabei in einem Arbeitsgang auf die ersten und zweiten Rohrabschnitte sowie den Übergangsbereich aufgebracht. Die dazu notwendige exakte Temperaturführung (gleiche Temperatur in den Übergangsbereichen zwischen den Abschnitten niedrigerer und höherer Wanddicke) wird dadurch erreicht, dass die ersten und zweiten Rohrabschnitte sowie der Übergangsbereich zur Beschichtungsvorbereitung in einem Ofen, insbesondere einem Umluftofen, auf eine einheitliche, erhöhte Beschichtungstemperatur zwischen 190°C und 250°C, vorzugsweise auf 230°C, gebracht wurden. Die Verwendung eines entsprechend dimensionierten und ausgeführten Ofens stellt sicher, dass beim Auftrag der FBE-Innenlage in allen Bereichen und auch insbesondere in den Übergangsbereichen ein homogener Temperaturverlauf und damit einen homogene und durchgehende Beschichtung sichergestellt werden kann.

In einer weiteren Ausbildung der Erfindung wird die Polyolefin-Außenlage als homogene durchgehende Schicht in einem ersten und zweiten Arbeitsgang aufgebracht, wobei der erste Arbeitsgang das Einbringen eines Polyolefin-Pulvers in einem Flock Spray Verfahren in die geschmolzene FBE-Innenlage (innerhalb der Gelzeit) umfasst und der zweite Arbeitsgang das Aufbringen eines Polyolefin-Pulvers in einem Flammspritzverfahren auf die Polyolefin-geimpfte FBE-Innenlage. Durch das Aufbringen bzw. Einbringen eines Polyolefin-Pulvers in die geschmolzene FBE-Innenlage wird sichergestellt, dass eine sehr homogene Verbindung zwischen der FBE-Innenlage und der Polyolefin-Außenlage sichergestellt werden kann. Der Begriff geschmolzene FBE-Innenlage bezeichnet hier die frisch auf das erwärmte Rohr aufgebrachte FBE-Schmelze, die sich noch in ihrem sogenannten Gel-Zustand befindet. Im Gel-Zustand laufen die irreversiblen Misch- und Vernetzungsprozesse ab, welche die FBE-Beschichtung nach dem Aufschmelzen auf das beheizte und sich nach dem Austritt aus dem Ofen abkühlende Rohr durchläuft.

Im zweiten Arbeitsgang wird das Polyolefin-Pulver in einem Flammspritzverfahren auf die FBE-Innenlage aufgebracht. Dabei wird zum einen das Polyolefin-Pulver in aufgeschmolzenem Zustand auf die FBE-Innenlage aufgetragen und gleichzeitig der Abkühlprozess dieser FBE-Innenlage mit den darin befindlichen Polyolefin-Bestandteilen beeinflusst, so dass eine innige Verbindung zwischen der Innenlage und der Polyolefin-Außenlage erfolgen kann.

In einer weiteren Ausführung wird die Beschichtung und insbesondere die Polyolefin-Außenlage dadurch vernetzt, dass die gesamte Großrohranordnung auf eine Temperatur von 50°C - 70°C, insbesondere von 60°C, abgekühlt wird. Dies erfolgt insbesondere in einem Wasserbad.

Es gibt Ausführungen, bei denen die Großrohranordnung mit einer FBE-Innenlage mit einer Schichtdicke von 80 - 450 µm und die Polyolefin-Außenlage mit einer Schichtdicke von 3,5 - 4,7 mm aufgetragen wurde.

In einer weiteren Ausführung enthalten die Polyolefin-Außenlagen einen Polypropylen-(PP)-Werkstoff. Polypropylen-Werkstoffe sind hinsichtlich ihrer mechanischen Eigenschaften (Schlagzähigkeit), ihrer chemischen Beständigkeit (seewasserbeständig) und ihrer Temperatureigenschaften besonders gut für die Verwendung bei seeverlegten Pipelines geeignet.

Ein erfindungsgemäßes Verfahren zur Herstellung einer solchen Großrohranordnung umfasst die Schritte:
- Bereitstellen einer Großrohranordnung mit einem ersten Rohrabschnitt mit einem ersten Außendurchmesser und einer ersten Wanddicke und einem zweiten Rohrabschnitt mit einem zweiten Außendurchmesser und einer zweiten Wanddicke, wobei der erste Außendurchmesser und die erste Wanddicke jeweils größer sind als der zweite Außendurchmesser und die zweite Wanddicke, und der erste Rohrabschnitt und der zweite Rohrabschnitt in einem Übergangsbereich miteinander verbunden, insbesondere verschweißt sind.
- Das Erwärmen der vollständigen Großrohranordnung in einem Ofen, insbesondere einem Umluftofen, auf eine Bearbeitungs- sowie Wärmebehandlungstemperatur zwischen 190°C und 280°C, vorzugsweise von 260°C.
- Das Aufbringen einer durchgehenden, homogenen Fusion-Bonded-Epoxy-(FBE)-Innenlage auf die Großrohranordnung.
- Optional wird nach dem Aufbringen der FBE-Innenlage die Temperatur der Großrohranordnung berührungslos (z.B. mittels eines Pyrometers) erfasst und zur Prozesssteuerung genutzt. Die FBE-Oberfläche weist dazu im Gegensatz zur Stahloberfläche einen konstanten Emissionsgrad auf.
   Insbesondere die thermische Überwachung der Stahloberflächentemperatur ist bei diesen in der Wanddicke unterschiedlichen Rohren von besonderer Bedeutung. Dies geschieht durch einen entsprechenden Aufbau und Einsatz von Messtechnik. Insbesondere die Handhabung der Messtechnik sowie die Interpretation der ermittelten Messdaten sind auf dieses Verfahren angepasst.
   Der Temperaturverlauf und die daraus resultierende Stahl- sowie Stahloberflächentemperatur bei dem hier beschriebenen Verfahren ermöglicht neben der Einstellung der für die Beschichtung notwendigen Temperaturfenster auch eine kontrollierte Wärmebehandlung des eigentlichen Stahles. Dies ist durch die verwendeten Ofentechnik sowie die Temperatursteuerung darstellbar, die für die Einsatzfähigkeit des sog. Buckle-Arrestor-Rohres notwendig (Kollapsbeständigkeit) ist.
- Das Aufbringen einer durchgehenden, homogenen Polyolefin-Außenlage auf die Fusion-Bonded-Epoxy- (FBE) -Innenlage.
- Das Vernetzen/Auskristallisieren der Polyolefin-Außenlage durch Abkühlen der Großrohranordnung auf eine Temperatur von 50°C - 70°C, insbesondere von 60°C in einer Abschreckbehandlung, insbesondere in einem Wasserbad.

Bei einer Ausführung des Verfahrens umfasst das Aufbringen der durchgehenden homogenen Fusion-Bonded-Epoxy-(FBE)-Innenlage,
- das Fördern der Großrohranordnung entlang einer Rohrlängsachse, das Drehen der Großrohranordnung um die Rohrlängsachse und
- das Aufbringen eines Epoxy-Werkstoffes (z.B. Pulver aus einer stationären Beschichtungseinrichtung) auf die erwärmte Großrohranordnung entlang einer Schraubenlinie.
   Damit ist sichergestellt, dass eine in Umfangs- und Längsrichtung homogen verlaufende FBE-Innenlage auf die Rohroberfläche aufgebracht wird.

Bei einer anderen Ausführung des Verfahrens umfasst das Aufbringen der durchgehenden, homogenen Polyolefin-Außenlage:
Das Fördern der Großrohranordnung entlang einer Rohrlängsachse, das Drehen der Großrohranordnung um die Rohrlängsachse,
- das Einbringen eines Polyolefin-Werkstoffes im einem z.B. Flock-Spray-Verfahren (alternativ auch elektrostatische Verfahren) in die geschmolzene FBE-Innenlage aus einer stationären Beschichtungseinrichtung, insbesondere entlang einer Schraubenlinie und/oder
- das Aufbringen eines Polyolefin-Werkstoffes in einem Flammspritzverfahren auf die FBE-Innenlage entlang einer Schraubenlinie und das Vernetzen der Polyolefin-Außenlage.

Bei dieser Verfahrensvariante wird sichergestellt, dass eine durchgehende homogene Polyolefin-Außenlage aufgebracht wird, die durch die beiden aufeinanderfolgenden Verfahrensschritte (Flock-Spray-Verfahren und Flammspritzverfahren) eine innige Verbindung der Polyolefin-Außenlage mit der FBE-Innenlage eingeht und in der gewünschten Schichtstärke der Polyolefin-Außenlage aufgebaut werden kann.

Eine Pipeline mit erfindungsgemäßen Großrohranordnungen bzw. mit Großrohranordnungen, die nach dem erfindungsgemäßen Verfahren hergestellt wurden, bietet hinsichtlich der Beschichtungsqualität in den Buckle-Arrestor-Rohrabschnitten Vorteile gegenüber herkömmlichen Pipelines.

Ein Ausführungsbeispiel der vorliegenden Erfindung wird nachfolgend anhand der Figuren erläutert. Dabei zeigt:
- Fig. 1: eine erfindungsgemäße Großrohranordnung,
- Fig. 2: eine schematische Schnittdarstellung des Bereichs A aus Fig. 1,
- Fig 2a: schematische Schnittdarstellung des Bereichs A einer alternativen Ausführung einer erfindungsgemäßen Großrohranordnung,
- Fig. 3: eine schematische Darstellung einer Beschichtungsanordnung für eine erfindungsgemäße Großrohranordnung,
- Fig. 4: eine schematische Darstellung einer Abschreckanordnung für eine erfindungsgemäße Großrohranordnung und
- Fig. 5: eine schematische Darstellung eines erfindungsgemäßen Verfahrens

### BESCHREIBUNG VON AUSFÜHRUNGSFORMEN

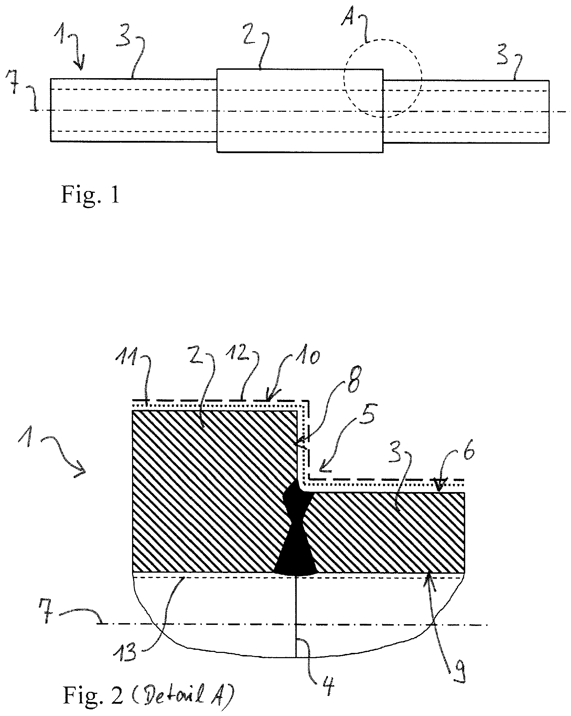

Fig. 1 zeigt eine Großrohranordnung 1 mit einem ersten Rohrabschnitt 2, der zwischen zwei zweiten Rohrabschnitten 3 angeordnet ist. Bei der dargestellten Großrohranordnung 1 handelt es sich um ein sogenanntes Buckle-Arrestor-Rohr, das zur Abstützung gegen den Außendruck bei unterseeisch verlegten Pipelines verwendet wird. Typische Dimensionen eines solchen Buckle-Arrestor-Rohrs 1 sind z.B. folgende:
Gesamtlänge: 12 m,
Länge jedes Rohrabschnittes: 4 m,
Innendurchmesser der ersten und zweiten Rohrabschnitte: 762 mm,
Wandstärke der zweiten Rohrabschnitte: 39 mm,
Wandstärke des ersten Rohrabschnittes: 74 mm.

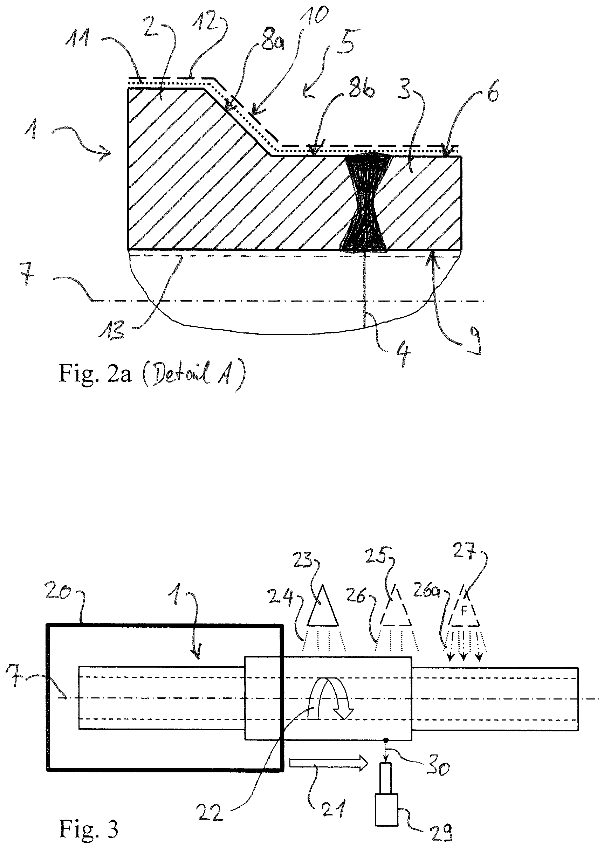

Fig. 2 zeigt das Detail A aus Fig. 1 in einer schematischen Schnittdarstellung. Der erste Rohrabschnitt 2 ist mittels einer Schweißnaht 4 in einem Übergangsbereich 5 mit dem zweiten Rohrabschnitt 3 verbunden.

Figur 2a zeigt eine alternative Ausführung. Der Übergangsbereich 5 umfasst hier einen kontinuierlichen mechanisch bearbeiteten, sich verjüngenden Übergangsbereich 8a (hier kegelstumpfförmig), der in einen rohrförmigen Anschlussbereich 8b übergeht und über die Schweißnaht 4 mit dem zweiten Rohrabschnitt 3 verbunden ist. Anschlussbereich 8b und der zweite Rohrabschnitt 3 weisen die gleiche Geometrie auf.

Zum Schutz gegen äußere Einflüsse weist die Großrohranordnung 1 an ihrer Außenfläche eine durchgehende, homogene, mehrlagige Außenbeschichtung 10 auf, die eine ebenfalls durchgehende und homogene Fusion-Bonded-Epoxy-(FBE)-Innenlage 11 (FBE-Lage) und eine durchgehende, homogene Polyolefin-Außenlage 12 umfasst (z.B. eine PP-Lage). Diese Polyolefin-Außenlage 12 ist im Wesentlichen aus einem Polypropylen-Werkstoff gebildet.

Die FBE-Lage weist eine Schichtdicke von 200 - 250 µm, die PP-Lage 12 eine Schichtdicke von 3250 - 4500 µm auf. Beide Lagen 11 und 12 der Außenbeschichtung 10 bilden jeweils und gemeinsam eine durchgängige homogene Schicht, die die Rohraußenfläche 6 sowohl in Umfangsrichtung als auch in Längsrichtung (entlang der Rohrachse 7) vollständig bedeckt. Dies gilt sowohl für die Umfangsflächen der Rohrabschnitte als auch für die freie Stirnfläche 8 des ersten Rohrabschnitts 2 und den Übergangsbereich 5. Optional weist die Innenfläche 9 der Großrohranordnung 1 eine Innenbeschichtung 13 auf.

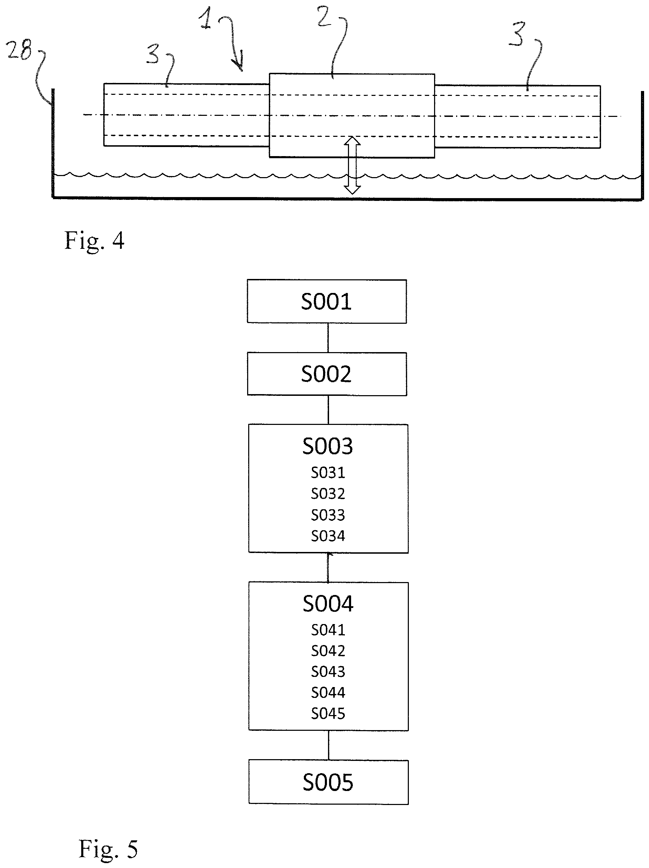

Das Beschichtungsverfahren wird anhand der Figuren 3, 4 und 5 näher beschrieben. Die Großrohranordnung 1 wird bereitgestellt (S001) und zunächst in einem Warmluftofen 20 auf eine Temperatur von 190 - 250 °C, insbesondere von 230°C erwärmt (S002). Der Ofen 20 ist dazu so ausgelegt, dass er die gesamte Großrohranordnung 1 oder wenigstens einen wesentlichen Abschnitt davon aufnehmen kann, sodass beim Durchlaufen des Ofens 20 der erste Rohrabschnitt 2, der zweite Rohrabschnitt 3 und der Übergangsbereich so erwärmt werden, dass diese den für die nachfolgende Beschichtung erforderlichen homogenen Temperaturverlauf aufweisen.

Die Großrohranordnung 1 verlässt den Ofen 20 in Pfeilrichtung (Pfeil 21,S031)und wird dabei um die Rohrachse 7 gedreht (Pfeil 22, S032)) und passiert eine erste Beschichtungseinrichtung 23, die entlang einer Schraubenlinie durchgehend, homogen und gleichmäßig einen Epoxy-Werkstoff auf die Rohraußenfläche 6 der erwärmten Großrohranordnung 1 aufträgt (S033). Der Epoxy-Werkstoff 24 wird in Pulverform aufgetragen und verschmilzt auf der erwärmten Rohraußenfläche 6 (durch die Eigenwärme der Großrohranordnung 1) und bildet dort eine durchgehende, homogene Schicht, die innig und dicht mit dem Oberflächenprofil der Rohraußenfläche 6 verbunden ist (S003).

Die Ermittlung und der Nachweis der korrekten Stahloberflächentemperaturen vor Beschichtung erfolgt ebenso durch einen speziellen Ansatz. Ein in die Beschichtungsstrecke integriertes Laserpyrometer 29 misst berührungslos insbesondere nach der FBE-Beschichtung (auf der FBE-Innenlage 11) über die Abstrahlung 30 die Temperatur der Großrohranordnung 1 (S034). Alternativ oder zusätzlich kann so die Temperatur auch nach der Polyolefin-Beschichtung (auf der Polyolefin-Außenlage 12) gemessen werden (S045).

Die genaue Temperaturmessung auf diese Weise ist verbessert, da die unbeschichteten Oberflächenabschnitte der Großrohranordnung 1 (die sog. Buckle-Arrestor-Rohre) unterschiedliche Oberflächenemissionsgrade aufweisen können (z.B. durch unterschiedliche mechanischen Bearbeitung und Wärmebehandlung), die eine Messung direkt auf der Stahloberfläche abschnittsweise verfälschen würden. Die unterschiedlichen Emissionsgrade sind durch übliche Ansätze messtechnisch nicht zu erfassen, da die Infrarotpyrometer in der Regel auf nur einen bestimmten Emissionsgrad der Stahloberfläche kalibriert werden, der aber stark schwanken kann.

Da der Emissionsgrad der (vor)beschichteten Oberflächenabschnitte konstant ist, ist so eine hinreichend genaue berührungslose Temperaturmessung der Großrohranordnung 1 während des Beschichtungsprozesses möglich und erlaubt eine genaue Steuerung des Beschichtungsprozesses.

Anschließend wird die Polyolefin-Außenlage (12) aufgebracht (S004). Dabei passiert die Großrohranordnung entlang der Förderachse (S041) und sich drehend (S042) eine zweite Beschichtungseinrichtung 25, die in einem Flock-Spray-Verfahren ein Polyolefin-Pulver, insbesondere ein Propylenpulver, in die Oberfläche der noch in ihrer Gelphase befindlichen Epoxy-Lage einträgt. Der Polyolefin-Werkstoff 26 wird in Pulver- bzw. Flockenform eingebracht (S043).

Abschließend wird beim Passieren einer dritten Beschichtungseinrichtung 27 in einem Flammspritzverfahren eine Polyolefin-Außenlage auf die FBE-Lage 11 aufgetragen (S045). Das Flammspritzverfahren dient dazu, das Polyolefin-Material 26a vor dem Beschichten aufzuschmelzen. Die Polyolefin-Außenlage 12 verbindet sich dabei über die in die FBE-Lage 11 eingeschmolzenen PP-Flocken 26 besonders innig mit dieser.

Um die Vernetzung/Kristallisation der Außenbeschichtung, insbesondere der Polyolefin-Lage 12 zu beschleunigen, wird die Großrohranordnung 1 abschließend in einem Wasserbecken 28 abgekühlt (auf eine Weiterbearbeitungstemperatur von etwa 60°C) (S005). Durch diese Kühlbehandlung wird die Außenbeschichtung 10 teilweise ausgehärtet und ist so für die nachfolgende Weiterbearbeitung bzw. für den Transport verhältnismäßig unempfindlich gegen äußere Beschädigungen bis sie vollständig nach etwa 24 Std. ausgehärtet ist.

In den Beschichtungseinrichtungen 23, 25, 27 wird das Epoxy-Material 24 bzw. die PP-Flocken 26 und die PP-Tropfen 26a entweder automatisiert oder aber auch manuell bzw. teilmechanisiert aufgetragen. Die Förder- und Drehgeschwindigkeit (Richtung 21 und 22), die in Kombination zu der gewünschten Schraubenbewegung der Großrohranordnung führt, wird so eingestellt, dass ein homogener durchgehender Schichtaufbau realisiert wird.

Weitere Varianten der Erfindung ergeben sich für den Fachmann im Rahmen der nachfolgenden Ansprüche.

### BEZUGSZEICHEN

- 1: Großrohranordnung
- 2: erster Rohrabschnitt
- 3: zweiter Rohrabschnitt
- 4: Schweißnaht
- 5: Übergangsbereich
- 6: Rohraußenfläche
- 7: Rohrachse
- 8: Stirnfläche
- 8a: Übergangsbereich
- 8b: Anschlussbereich
- 9: Innenfläche
- 10: Außenbeschichtung
- 11: FBE-(Innen)lage
- 12: Polyolefin-(Außen)lage
- 13: Innenbeschichtung
- 20: Ofen
- 21: Pfeil
- 22: Pfeil
- 23: erste Beschichtungseinrichtung
- 24: Epoxy-Material
- 25: zweite Beschichtungseinrichtung
- 26: PP-Flocken
- 26a: PP-Tropfen
- 27: dritte Beschichtungseinrichtung
- 28: Wasserbecken
- 29: Laserpyrometer
- 30: Abstrahlung

## Patentansprüche

1. Großrohranordnung (1) für eine Pipeline, aufweisend:
einen ersten Rohrabschnitt (2) mit einem ersten Außendurchmesser und einer ersten Wanddicke und einem zweiten Rohrabschnitt (3) mit einem zweiten Außendurchmesser und einer zweiten Wanddicke, wobei
der erste Außendurchmesser und die erste Wanddicke jeweils größer sind als der zweite Außendurchmesser und die zweite Wanddicke,
der erste Rohrabschnitt (2) und der zweite Rohrabschnitt (3) in einem Übergangsbereich (5) miteinander verbunden, nämlich verschweißt, sind und
der erste und zweite Rohrabschnitt (2, 3) sowie der Übergangsbereich (5) mit einer durchgehenden und homogenen mehrlagigen Außenbeschichtung (10) versehen sind, die eine durchgehende, homogene Fusion-Bonded-Epoxy FBE-Innenlage (11) und eine durchgehende, homogene Polyolefin-Außenlage (12) umfasst.

2. Großrohranordnung (1), nämlich ein Buckle-Arrestor-Rohr, nach Anspruch 1, bei welchem ein erster Rohrabschnitt (2) zwischen zwei zweiten Rohrabschnitten (3) angeordnet und mit diesen verbunden ist.

3. Großrohranordnung (1) nach Anspruch 1 oder 2, bei welchem die FBE-Innenlage (11) in einem Arbeitsgang auf die ersten und zweiten Rohrabschnitte (2, 3) sowie den Übergangsbereich (5) aufgebracht wurde, wobei die ersten und zweiten Rohrabschnitte (2, 3) sowie der Übergangsbereich (5) zum Beschichten in einem Ofen (20) auf eine einheitliche, erhöhte Beschichtungstemperatur zwischen 190°C und 250°C gebracht wurden.

4. Großrohranordnung (1) nach Anspruch 1, 2 oder 3, bei welcher die Polyolefin-Außenlage (12) in einem ersten und zweiten Arbeitsgang aufgebracht wurde, wobei
der erste Arbeitsgang das Einbringen eines Polyolefinwerkstoffes in einem Flock-Spray-Verfahren in die geschmolzene FBE-Innenlage umfasst und
der zweite Arbeitsgang das Aufbringen eines Polyolefinwerkstoffes in einem Flammspritzverfahren auf die FBE-Innenlage umfasst.

5. Großrohranordnung (1) nach Anspruch 1, 2, 3 oder 4, bei welchem durch eine Abschreckbehandlung (28) die Polyolefin-Außenlage (12) vernetzt und die Großrohranordnung (1) auf eine Temperatur von 50° bis 70°C, abgekühlt wird.

6. Großrohranordnung (1) nach Anspruch 1, 2, 3 oder 4, bei welchem die FBE-Innenlage (11) eine Schichtdicke von 80 bis 250 µm und die Polyolefin-Außenlage (12) einen Schichtdicke von 3250 bis 4500 µm aufweist.

7. Großrohranordnung (1) nach einem der vorhergehenden Ansprüche, bei welchem die Polyolefin-Außenlage (12) einen Polypropylen (PP)-Werkstoff aufweist.

8. Verfahren zur Herstellung einer Großrohranordnung (1) umfassend:
- (S001) Bereitstellen einer Großrohranordnung (1) aufweisend einen ersten Rohrabschnitt (2) mit einem ersten Außendurchmesser und einer ersten Wanddicke und einen zweiten Rohrabschnitt (3) mit einem zweiten Außendurchmesser und einer zweiten Wanddicke, wobei der erste Außendurchmesser und die erste Wanddicke jeweils größer sind als der zweite Außendurchmesser und die zweite Wanddicke, und der erste Rohrabschnitt und der zweite Rohrabschnitt in einem Übergangsbereich miteinander verbunden, nämlich verschweißt sind;
- (S002) Erwärmen der Großrohranordnung (1) in einem Ofen (20) auf eine Bearbeitungstemperatur zwischen 190°C und 250°C;
- (S003) Aufbringen einer durchgehenden, homogenen FBE-Innenlage (11) auf die Großrohranordnung (1),
- (S004) Aufbringen einer durchgehenden, homogenen Polyolefin-Außenlage (12) auf die FBE-Innenlage (11),
- (S005) Vernetzten/Kristallisieren der Polyolefin-Außenlage (12) durch Abkühlen der Großrohranordnung (1) auf eine Temperatur von 50° bis 70°C in einer Abschreckbehandlung (28).

9. Verfahren nach Anspruch 8, wobei (S003), das Aufbringen der durchgehenden, homogenen FBE-Innenlage (11) umfasst:
- (S031) Fördern der Großrohranordnung (1) entlang einer Rohrachse (7),
- (S032) Drehen der Großrohranordnung um die Rohrachse (7),
- (S033) Aufbringen eines Epoxymaterials (24) aus einer ersten Beschichtungseinrichtung (23) auf die erwärmte Großrohranordnung (1) entlang einer Schraubenlinie.

10. Verfahren nach Anspruch 8 oder 9, wobei (S004), das Aufbringen der durchgehenden, homogenen Polyolefin-Außenlage (12) umfasst:
- (S041) Fördern der Großrohranordnung (1) entlang einer Rohrachse (7),
- (S042) Drehen der Großrohranordnung (1) um die Rohrachse (7),
- (S043) Einbringen eines Polyolefinwerkstoffes (26) in einem Flock-Spray-Verfahren in die geschmolzene FBE-Innenlage (11) aus einer zweiten Beschichtungseinrichtung (25), nämlich entlang einer Schraubenlinie und/oder
- (S044) Aufbringen eines Polyolefinwerkstoffes (26a) in einem Flammspritzverfahren auf die FBE-Innenlage (11) entlang einer Schraubenlinie.

11. Verfahren nach Anspruch 9 oder 10, wobei (S003), das Aufbringen der durchgehenden, homogenen FBE-Innenlage (11) und/oder (S004), das Aufbringen der durchgehenden, homogenen Polyolefin-Außenlage (12), umfasst:
- (S034; S045) berührungsloses Erfassen der Temperatur der Großrohranordnung (1) auf der FBE-Innenlage (11) und/oder der Polyolefin-Außenlage (12)

12. Pipeline mit einer Großrohranordnung (1) nach einem der Ansprüche 1 bis 7 und/oder mit einer Großrohranordnung (1), die nach einem Verfahren gemäß einem der Ansprüche 8 bis 11 hergestellt sind.

## Claims

1. Large-diameter pipe arrangement (1) for a pipeline, comprising:
a first pipe section (2) with a first external diameter and a first wall thickness and a second pipe section (3) with a second external diameter and a second wall thickness, wherein
the first external diameter and the first wall thickness are each larger than the second external diameter and the second wall thickness,
the first pipe section (2) is connected with, namely welded to, the second pipe section (3) in a transition region (5), and
the first and second pipe sections (2, 3) and the transition region (5) are provided with a continuous and homogeneous multi-layered outer coating (10) which comprises a continuous, homogeneous fusion bonded epoxy (FBE) inner layer (11) and a continuous, homogeneous polyolefin outer layer (12).

2. The large-diameter pipe arrangement (1), namely a buckle arrestor pipe, according to claim 1 in which a first pipe section (2) is disposed between and connected with two second pipe sections (3).

3. The large-diameter pipe arrangement (1) according to claim 1 or 2 in which the FBE inner layer (11) has been applied on the first and second pipe sections (2, 3) and the transition region (5) in one process step, wherein the first and second pipe sections (2, 3) and the transition region (5) have been heated up to a uniform, increased coating temperature between 190°C and 250°C for coating in an oven (20).

4. The large-diameter pipe arrangement (1) according to claims 1, 2 or 3 in which the polyolefin outer layer (12) has been applied in first and second process steps, wherein
the first process step comprises, introducing a polyolefin material into the melted FBE inner layer by way of flock spraying and
the second process step comprises, applying a polyolefin material onto the FBE inner layer by way of flame spraying.

5. The large-diameter pipe arrangement (1) according to claims 1, 2, 3 or 4, in which quenching causes the polyolefin outer layer (12) to interlink and the large-diameter pipe arrangement (1) to cool down to a temperature of 50° to 70°C.

6. The large-diameter pipe arrangement (1) according to claims 1, 2, 3 or 4 in which the FBE inner layer (11) comprises a layer thickness of 80 to 250 µm and the polyolefin outer layer (12), a layer thickness of 3250 to 4500 µm.

7. The large-diameter pipe arrangement (1) according to any of the preceding claims in which the polyolefin outer layer (12) comprises a polypropylene (PP) material.

8. Method for producing a large-diameter pipe arrangement (1), comprising:
- (S001) providing a large-diameter pipe arrangement (1) having a first pipe section (2) with a first external diameter and a first wall thickness and a second pipe section (3) with a second external diameter and a second wall thickness, wherein the first external diameter and the first wall thickness are each larger than the second external diameter and the second wall thickness, and the first pipe section and the second pipe section are connected, namely welded, to one another in a transition region;
- (S002) heating the large-diameter pipe arrangement (1) in an oven (20) to a processing temperature between 190°C and 250°C
- (S003) applying a continuous, homogeneous FBE inner layer (11) on the large-diameter pipe arrangement (1),
- (S004) applying a continuous, homogeneous polyolefin outer layer (12) on the FBE inner layer (11),
- (S005) interlinking/crystallizing the polyolefin outer layer (12) by cooling the large-diameter pipe arrangement (1) to a temperature of 50° to 70°C, by quenching.

9. The method according to claim 8, wherein (S003), applying the continuous, homogeneous FBE inner layer (11) comprises:
- (S031) conveying the large-diameter pipe arrangement (1) along a pipe axis (7),
- (S032) rotating the large-diameter pipe arrangement about the pipe axis (7),
- (S033) applying an epoxy material (24) from a first coating device (23) on the heated large-diameter pipe arrangement (1) along a helical line.

10. The method according to claim 8 or 9, wherein (S004), applying the continuous, homogeneous polyolefin outer layer (12), comprises:
- (S041) conveying the large-diameter pipe arrangement (1) along a pipe axis (7),
- (S042) rotating the large-diameter pipe arrangement about the pipe axis (7),
- (S043) introducing a polyolefin material (26) by way of flock spraying into the melted FBE inner layer (11) from a second coating device (25), namely along a helical line and/or
- (S044) applying a polyolefin material (26a) by way of flame spraying on the FBE inner layer (11) along a helical line.

11. The method according to claim 9 or 10, wherein (S003), applying the continuous, homogeneous FBE inner layer (11) and/or (S004), applying the continuous, homogeneous polyolefin outer layer (12), comprises:
- (S034; S045) non-contact capturing the temperature of the large-diameter pipe arrangement (1) on the FBE inner layer (11) and/or the polyolefin outer layer (12).

12. Pipeline with a large-diameter pipe arrangement (1) according to any of claims 1 to 7 and/or with a large-diameter pipe arrangement (1), produced according to a method according to any of claims 8 to 11.

## Revendications

1. Agencement de gros tube (1) pour pipeline, comprenant :
une première section de tube (2) ayant un premier diamètre extérieur et une première épaisseur de paroi et une seconde section de tube (3) ayant un second diamètre extérieur et une seconde épaisseur de paroi, où
le premier diamètre extérieur et la première épaisseur de paroi sont respectivement supérieurs au second diamètre extérieur et à la seconde épaisseur de paroi,
la première section de tube (2) et la seconde section de tube (3) sont reliées, plus précisément soudées, entre elles dans une zone de transition (5), et
la première et la seconde section de tube (2, 3) et la zone de transition (5) sont pourvues d'un revêtement extérieur multicouche continu et homogène (10) comprenant une couche intérieure continue et homogène d'époxy liée par fusion FBE (angl. « Fusion-Bonded-Epoxy ») (11) et une couche extérieure continue et homogène de polyoléfine (12).

2. Agencement de gros tube (1), plus précisément un tube raidisseur (angl. « buckle arrestor »), selon la revendication 1, dans lequel une première section de tube (2) est agencée entre deux secondes sections de tube (3) et reliée à celles-ci.

3. Agencement de gros tube (1) selon la revendication 1 ou 2, dans lequel la couche intérieure de FBE (11) a été appliquée en une seule opération sur les première et seconde sections de tube (2, 3) et la zone de transition (5), les première et seconde sections de tube (2, 3) et la zone de transition (5) étant amenées, dans un four (20), à une température de revêtement uniforme et élevée comprise entre 190°C et 250°C pour le revêtement.

4. Agencement de gros tube (1) selon la revendication 1, 2 ou 3, dans lequel la couche extérieure de polyoléfine (12) a été appliquée dans une première et une seconde opération, où
la première opération comprend l'incorporation d'un matériau de polyoléfine dans la couche intérieure de FBE fondue par un procédé de flocage par pulvérisation, et
la seconde opération comprend l'application d'un matériau de polyoléfine sur la couche intérieure de FBE par un procédé de projection à flamme.

5. Agencement de gros tube (1) selon la revendication 1, 2, 3 ou 4, dans lequel la couche extérieure de polyoléfine (12) est réticulée et l'agencement de gros tube (1) est refroidi à une température de 50° à 70°C par un traitement de trempage (28).

6. Agencement de gros tube (1) selon la revendication 1, 2, 3 ou 4, dans lequel la couche intérieure de FBE (11) présente une épaisseur de couche de 80 à 250 µm et la couche extérieure de polyoléfine (12) présente une épaisseur de couche de 3250 à 4500 µm.

7. Agencement de gros tube (1) selon l'une des revendications précédentes, dans lequel la couche extérieure de polyoléfine (12) présente un matériau polypropylène (PP).

8. Procédé de fabrication d'un agencement de gros tube (1) comprenant :
- (S001) la fourniture d'un agencement de gros tube (1) comprenant une première section de tube (2) ayant un premier diamètre extérieur et une première épaisseur de paroi, et une seconde section de tube (3) ayant un second diamètre extérieur et une seconde épaisseur de paroi, le premier diamètre extérieur et la première épaisseur de paroi étant respectivement supérieurs au deuxième diamètre extérieur et à la deuxième épaisseur de paroi, et la première section de tube et la seconde section de tube étant reliées, plus précisément soudées, entre elles dans une zone de transition (5);
- (S002) le réchauffement de l'agencement de gros tube (1), dans un four (20), à une température de traitement comprise entre 190°C et 250°C ;
- (S003) l'application d'une couche intérieure continue et homogène de FBE (11) sur l'agencement de gros tube (1),
- (S004) l'application d'une couche extérieure continue et homogène de polyoléfine (12) sur la couche intérieure de FBE (11),
- (S005) la réticulation/cristallisation de la couche extérieure de polyoléfine (12) par refroidissement de l'agencement de gros tube (1) à une température de 50° à 70°C dans un traitement de trempage (28).

9. Procédé selon la revendication 8, dans lequel (S003), l'application de la couche intérieure continue et homogène de FBE (11) comprend :
- (S031) le transport de l'agencement de gros tube (1) le long d'un axe de tube (7),
- (S032) la rotation de l'agencement de gros tube (1) autour de l'axe de tube (7),
- (S033) l'application, le long d'une ligne hélicoïdale, d'un matériau époxy (24) provenant d'un premier dispositif de revêtement (23) sur l'agencement de gros tube (1) réchauffé.

10. Procédé selon la revendication 8 ou 9, dans lequel (S004), l'application de la couche extérieure continue et homogène de polyoléfine (12) comprend :
- (S041) le transport de l'agencement de gros tube (1) le long d'un axe de tube (7),
- (S042) la rotation de l'agencement de gros tube (1) autour de l'axe de tube (7),
- (S043) l'incorporation, par un procédé de flocage par pulvérisation, d'un matériau de polyoléfine (26) dans la couche intérieure de FBE (11) fondue provenant d'un second dispositif de revêtement (25), plus précisément le long d'une ligne hélicoïdale, et/ou
- (S044) l'application d'un matériau de polyoléfine (26a), par procédé de projection à flamme, sur la couche intérieure de FBE (11) le long d'une ligne hélicoïdale.

11. Procédé selon la revendication 9 ou 10, dans lequel (S003), l'application de la couche intérieure continue et homogène de FBE (11) et/ou (S004), l'application de la couche extérieure continue et homogène de polyoléfine (12) comprend :
- (S034 ; S045) la détection sans contact de la température de l'agencement de gros tube (1) sur la couche intérieure de FBE (11) et/ou la couche extérieure de polyoléfine (12).

12. Pipeline avec un agencement de gros tube (1) selon l'une des revendications 1 à 7 et/ou avec un agencement de gros tube (1) fabriqué par un procédé selon l'une des revendications 8 à 11.
